# EUROPEAN PATENT APPLICATION

(11) **EP 2 846 272 A2**
(43) Date of publication of application: **11.03.2015**
(21) Application number: 14156238.9
(22) Date of filing: 21.02.2014
(51) Int. Cl.: G06F 17/30, H04N 21/422

(54) **Electronic apparatus, method for controlling electronic apparatus, and information recording medium**

(30) Priority: 06.09.2013 JP 2013185120
(71) Applicant: Kabushiki Kaisha Toshiba, Tokyo 105-8001 (JP)
(72) Inventor: Ito, Hiroaki, Tokyo, 105-8001 (JP); Yamashita, Michio, Tokyo, 105-8001 (JP); Nakagawa, Tomoki, Tokyo, 105-8001 (JP)
(74) Representative: Henkel, Breuer & Partner

(57) **Abstract**

A first database file (243) stores scene list data comprising caption data of captions and time data indicative of time to display the captions. A second database file (244) stores keywords. The keywords indicate character strings of the caption data of a program currently being viewed. When an order to display the keywords is input, a keyword list generator (232) reads a plurality of keywords from the second database file (244) and generates a keyword list for display. When an optional keyword is selected, the scene list generator (233) generates scene selection items.

## Description

Embodiments described herein relate generally to an electronic apparatus, method for controlling an electronic apparatus, and information recording medium.

A recorder configured to record television signals (i.e., an electronic apparatus such as a television receiver including a recording medium and a recording/reproducing apparatus) includes a recording medium for signal recording, and the capacity of such a recording medium has been increased in accordance with technological advances. Therefore, many programs can be recorded on a single recording medium.

Meanwhile, a number of techniques to retrieve a desired program or scene from programs recorded on a recording medium have been proposed.

Here, to retrieve a desired program or scene from the programs recorded on the recording medium, users have conventionally input a retrieval keyword manually in the apparatus; however, such manual input often inconveniences the user.

A general architecture that implements the various features of the embodiments will now be described with reference to the drawings. The drawings and the associated descriptions are provided to illustrate the embodiments and not to limit the scope of the invention.
FIG. 1 illustrates an example of a configuration of a television receiver with the present embodiments applied.
FIG. 2 illustrates an example of a program guide.
FIG. 3 illustrates the program guide and a plurality of captioned scenes in programs broadcast based on the program guide.
FIG. 4 illustrates a structural example of one embodiment together with an operation example of broadcast signal reception.
FIG. 5 illustrates a structural example of one embodiment together with an operation example of recorded signal reproduction.
FIG. 6 illustrates an example of images displayed on a display in an operation according to one embodiment.
FIG. 7 illustrates another example of images displayed on a display in an operation according to one embodiment.
FIG. 8 is a flowchart illustrating an operation example according to one embodiment.
FIG. 9 illustrates a structure of another embodiment.

Various embodiments will be described hereinafter with reference to the accompanying drawings.

In general, according to one embodiment, there are provided an electronic apparatus to which a keyword used for retrieving a desired scene can be easily input, a control method of the same apparatus, and an information storage medium storing the same method. Furthermore, there are provided an electronic apparatus by which a scene the user is interested in can be easily retrieved, a control method of the same apparatus, and an information storage medium storing the same method. Furthermore, there are provided an electronic apparatus by which, even when the user has changed his interest, a scene the user is now interested in can be easily and flexibly retrieved, a control method of the same apparatus, an information storage medium storing the same method.

According to an embodiment of the present disclosure, an electronic apparatus comprising:
a first database file configured to store scene list data comprising caption data of captions of received programs and time data indicative of a time to display a caption;
a second database file configured to store keywords comprising character strings of the caption data of a program currently being viewed;
a keyword list generator configured to generate a keyword list by reading a plurality of keywords corresponding to the program from the second database file when an order to display the keywords is input during the program currently being viewed; and
a scene list generator configured to generate the scene list comprising scene selection items of a plurality of scenes comprising the caption data corresponding to a first keyword by using the scene list data when the first keyword is selected from the keywords currently being displayed.

An embodiment will further be described with reference to the drawings.

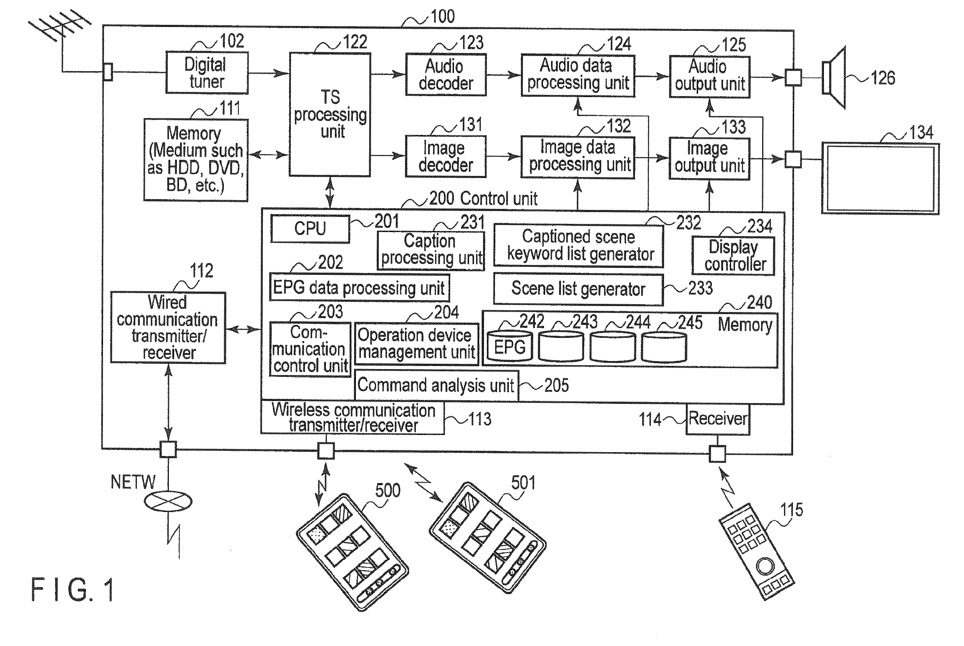

FIG. 1 illustrates an example of a configuration of a television receiver with the present embodiments applied. In addition to the television receiver, the present embodiments are applicable to a recording/reproducing apparatus, personal computer, server, and set-top box. The following description is given to the television receiver shown in FIG. 1.

The television receiver comprises a digital tuner device 102. The digital tuner device 102 includes a plurality of tuners configured to receive, for example, encrypted digital terrestrial broadcast signals. Generally, the number of tuners may be 4 to 8, and each of them can receive different broadcast signals. The digital tuner device 102 may be incorporated into a DBS/DTH digital broadcast receiving tuner (not shown).

The broadcast signals received at the digital tuner device 102 are input to a transport stream (TS) processing unit 122, and transport streams of a plurality of channels (CHs) are re-multiplexed into a single TS. The re-multiplexed TS includes packet strings of the broadcast of each channel. Identification information for identifying channels and packets is added to the packets of each channel. The re-multiplexed TS is input in a memory device 111. The memory device may be called a recording and reproducing apparatus. Among the transport streams input in the TS processing unit 122, packets including control information (occasionally referred to as control packets or service information packets) are input in a control unit 200 to be processed. Furthermore, the TS includes packets including electronic program guide (EPG) data. The EPG data can be used for preparation of a program guide.

The memory device 111 includes a hard disk drive (HDD) and an optical disk recording/reproducing device, for example. The optical disk may be digital versatile disk (DVD [Registered Trademark]) or Blu-ray disk (BD [Registered Trademark]), etc.

The hard disk drive of the memory device 111 can store (automatically record) the entire programs broadcast through a plurality of channels in two to three weeks, for example. If an additional hard disk drive is given, the entire programs for one to four months may be stored. Automatic deletion may be performed to delete old programs in recording order while excluding programs specifically designated. The term "programs specifically designated" stands for the programs designated by a user to be permanent archival. To designate programs for permanent archival, the user selects a special program designation button on a menu screen to call up the program guide, and in the program guide, the user selects a target program to be archived permanently and presses a confirm button. The program is then specifically designated.

The packets transferred from the TS processing unit 122 to the control unit 200 include, for example, an Entitlement Control Message (ECM) which is information of encrypted broadcast programs, Event Information Table (EIT) which is a table describing event information such as programs, casts, and start time, etc., and electronic program guide (EPG) data. The program guide can be prepared based on the EPG data.

The image data included in the packet is encoded according to, for example, the Moving Picture Experts Group (MPEG) standard and Advanced Video Coding standard. The audio data in the audio packet is encoded in, for example, pulse code modulation (PCM) format, Dolby (Registered Trademark) format, and MPEG format.

The TS processing unit 122 includes a packet separator configured to separate the image packets and the audio packets of the program, to separate packets including the other control data and EPG data therefrom, and to output the image packets and the audio packets separately.

The packets including the audio data separated in the TS processing unit 122 are input in an audio decoder 123 and decoded in accordance with their encoding scheme. The audio data decoded in the audio decoder 123 is subjected to a synchronization process and volume adjustment in an audio data processing unit 124, and supplied to an audio output unit 125. The audio output unit 125 executes a stereo separation process based on a speaker system used therein and supplies the output to a speaker 126.

The packets including the image data separated in the TS processing unit 122 are input in an image decoder 131 and decoded in accordance with their encoding scheme. The image data decoded in the image decoder 131 is subjected to a synchronization process, brightness adjustment, and color adjustment in an image data processing unit 132. The output from the image data processing unit 132 is supplied to an image output unit 133.

The image output unit 133 can multiplex a data, figure, and table from the control unit 200 on a main image signal. Furthermore, the image output unit 133 can set a scale, resolution, number of lines, and aspect ratio corresponding to a display 134 with respect to the output image signals and outputs the output image signals to the display 134.

Note that, there is a case where the audio packets and the image packets are scrambled for a pay-per-view program. In that case, a system to cancel such a scramble using key information may be used; however, it is omitted from the description here.

The control unit 200 comprises a central processing unit (CPU) 201, EPG data processing unit 202, communication control unit 203, operation device management unit 204, and command analysis unit 205.

The CPU 201 adjusts the whole functional sequences of the control unit 200.

The EPG data processing unit 202 generates a program guide for display using the received EPG data. Furthermore, the EPG data processing unit 202 associates various data included in the EPG data with the programs and store the associated data.

The communication control unit 203 communicates with external devices and takes in operation commands, data, and content, etc. The content and data are then stored in, for example, the memory device 111 or a nonvolatile memory (may be referred to as memory unit or memory device) 240. The communication control unit 203 transmits the data and content, etc., to the outside through a television receiver 100.

The communication control unit 203 is connected to a wireless communication transmitter/receiver 113 and a wired communication transmitter/receiver 112. The wired communication transmitter/receiver 112 transmits/receives data to/from a remote server or a home server through the Internet. The wireless communication transmitter/receiver 113 is for short-range wireless communication and transmits/receives data to/from a plurality of mobile devices 500 and 501. Furthermore, the television receiver 100 receives operation signals from a remote control 115 through a receiver 114.

The operation device management unit 204 ascertains device identification data of such devices configured to provide the control unit 200 with operation signals as the mobile devices 500 and 501 and the remote control 115 and manages the ascertained device identification data.

The command analysis unit 205 analyzes the operation command input from the outside and reflects the operation corresponding to the command onto the television receiver 100.

The control unit 200 further comprises a caption processing unit 231, captioned scene keyword list generator 232, scene list generator 233, and display controller 234. The control unit 200 comprises a memory 240 for structuring a database file.

The memory 240 stores various data and applications to be stored in the control unit 200. A data file 242 stores the EPG data. The EPG data is updated periodically: every week or two, for example. If there is a sudden change in the program guide, the data is updated automatically in accordance with the control signal.

The caption processing unit 231 extracts captioned scene data which is data including caption data generated from captions indicated in a program (mainly a program automatically received) and time data indicative of times to display the captions. The captioned scene data is stored in a database file 243 in the memory 240.

The captioned scene keyword list generator 232 extracts at least caption data from a program currently being reproduced or received (mainly a program selected and currently being viewed by a user), and takes out character strings of the caption data as the caption scene keywords. The caption scene keywords are divided by, for example, a noun unit, and stored in a database file 244 in the memory 240.

When the user selects any keyword from the caption scene keywords are displayed on the display 134, the scene list generator 233 executes an operation corresponding to the selected keyword.

Here, the scene list generator 233 accesses the database file 243 based on the selected keyword, and generates scene selection items of the caption scene corresponding to the selected keyword to output the scene selection items as a scene list on the display 134 via the display controller 234. Here, the scene selection items can be prepared per program and a plurality of scene selection items can be prepared in one program.

With the structure above, the database file 243 stores both caption data generated from the captions indicated in the program and time data indicative of the times to display the captions as the captioned scene data.

The database file 244 extracts at least caption data from a program currently being reproduced or received (a program currently being viewed by a user), and stores character strings (nouns) of the caption data as keywords. Therefore, if the reproduction time or reception time of a program is shorter, fewer keywords are stored.

When an operation signal (instruction) is input during the reproduction or reception of the program (while the program is being viewed), the keyword list generator 232 outputs the keywords stored in the database file 244 for display.

When an optional keyword is selected from the keywords displayed on the display 134, the scene list generator 233 outputs selection items of a plurality of scenes including captions corresponding to the selected keyword as a scene list. If a past keyword display function is available, a history and change of keywords in which the user had been interested can be referred to.

A database file 245 is used to store the other data. The database file 245 may store, for example, a keyword selection history. Moreover, the database file 245 may store, for example, a statistical data of the keywords selected by the user in the last few weeks.

The display controller 234 generally controls the image signals displayed on the display 134 through the image output unit 133. The display controller 234 may be referred to as an on-screen display (OSD) controller. The display controller 234 may adjust resolution, display size, and display area of the image signals. Furthermore, the display controller 234 supplies to the image output unit 133 the image signals of the program guide prepared based on the EPG data and the menu image signal prepared in the control unit 200 based on the operation signal.

The mobile devices 500 and 501 can remotely control the television receiver 100.

The mobile devices 500 and 501 access a server through a base station or the Internet (not shown). The mobile devices 500 and 501 naturally download the content provided from the server and further download various applications and games, etc., and transmit them to the control unit 200 through the wireless communication transmitter/receiver 113. Furthermore, the mobile devices 500 and 501 transmit information (for example, an address, mail address and network address of a web server) to acquire such content for the control unit 200 through the wireless communication transmitter/receiver 113.

The address and mail address of the web server and information of moving picture, still image and picture image may be referred to as "information of recommendation" or "information of interest".

The menu image signal for display and the program guide image signal are stored in and managed by, for example, the database file 245. When a menu or program guide is displayed, menu screen data or program guide image signal is read from a data storage unit (memory or hard disk) based on the control of the display controller 234. Thereby, the menu image and program guide image are displayed on the display 134.

The menu image signal for display and the program guide image signal may be transmitted to the mobile devices 500 and 501. If the mobile devices 500 and 501 request the menu image signal and program guide image signal, the control unit 200 transmit them in response to the request. Furthermore, a keyword list or a scene list described below may be transferred to the mobile devices 500 and 501.

The mobile devices 500 and 501 display the menu image signal and program guide image signal on their touchpanel screen, and the user touches an operation button displayed on the touchpanel (pointing device) screen to send an operation order signal to the television receiver.

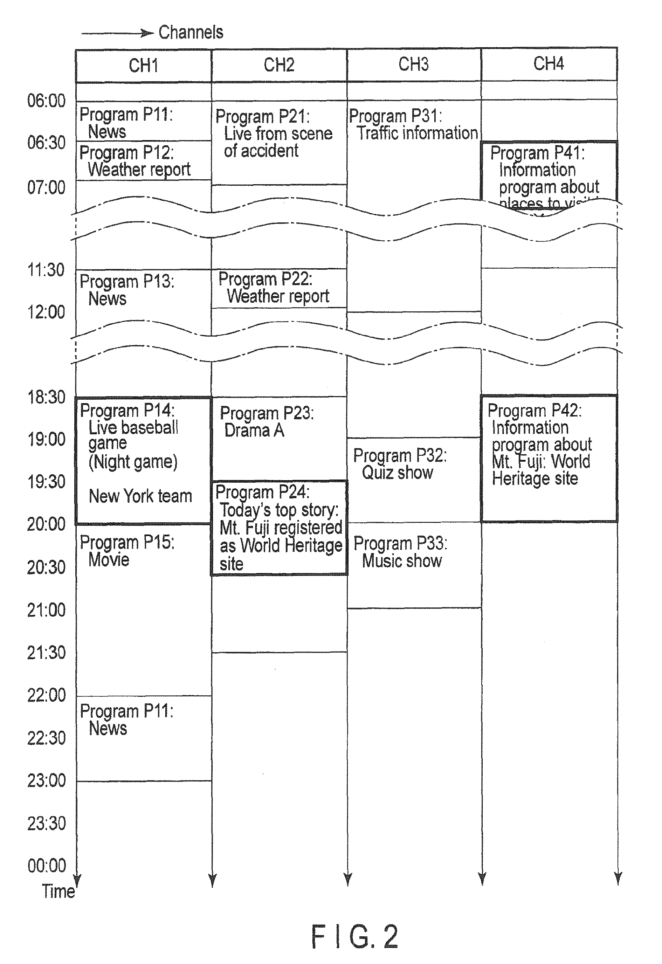

FIG. 2 illustrates an example of the program guide prepared based on the EPG data. The program guide is displayed on the display 134 under the control of the display controller 234 when a "program guide" button of the remote control 115 is pressed. In FIG. 2, a vertical direction indicates a time course and a horizontal direction indicates channels CH1, CH2, CH3, and CH4. When the user manipulates a scroll button (a button with an arrow indicative of a scroll direction) of the remote control 115, the guide is scrolled in both horizontal and vertical directions to show the other channels and the following time course.

FIG. 2 shows the following program guide, for example.

On channel CH1, programs such as P11 (news), P12 (weather report), P13 (news), P14 (live baseball game), P15 (movie), and P16 (news), etc., are broadcast.

On channel CH2, programs such as P21 (live from scene of accident), P22 (weather report), P23 (drama A), and P24 (today's topstory: Mt. Fuji registered as World Heritage site), etc., are broadcast.

On channel CH3, programs such as P31 (traffic information), P32 (quiz show), and P33 (music show), etc., are broadcast.

On channel CH4, programs such as P41 (information program about places to visit in New York) and P42 (information program about Mt. Fuji: World Heritage site), etc., are broadcast.

While the program guide is being displayed, the user moves a cursor to a program to be viewed by the operation of the remote control. When the cursor is on the program to be viewed, the user presses a confirm button of the remote control to start viewing the program.

The program guide data includes data of a past program guide, a current (today's) program guide, and a future program guide (programs of the next few weeks). However, for easier understanding, only the today's program guide is shown in FIG. 2, and the description hereinafter is presented given that the present time is 22:00.

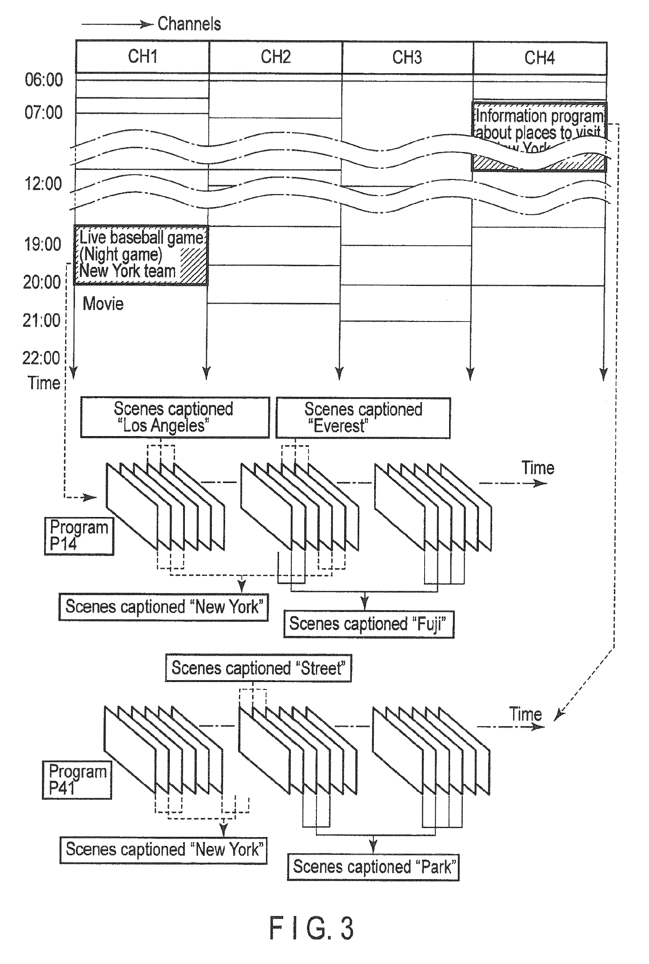

FIG. 3 illustrates a process to be performed when the apparatus of the present embodiment automatically records the programs.

The television receiver of the present embodiment comprises the caption processing unit 231. When program P14 (live baseball game) shown in FIGS. 2 and 3 is recorded, a caption process is performed. In the caption process, the caption data generated from the captions included in the program and the time data indicative of the time to display the captions are extracted as the captioned scene data. The captioned scene data are stored in the database file 243 in the memory 240.

Now, given that the baseball game broadcast as program P14 is between team New York Fuji (NY-FUJI) and team Los Angeles Everest (LA-EVEREST), it is estimated that words (keywords) such as "New York" and "Fuji" would be captioned frequently during the broadcast of the game. Furthermore, it is estimated that words (keywords) such as "Los Angeles" and "Everest" would be captioned frequently as well.

Thus, the captioned scene data including scenes captioned "New York" and scenes captioned "Los Angeles" are stored in the database file 243 in the memory 240.

Here, a large number of captioned scene data are acquired during the game in addition to the above captioned scene data. Thus, a limiting process is performed when the captioned scene data are stored in the database file 243. Various conditions to initiate the limitation can be set.

For example, a plurality of, namely, twenty to thirty words (keywords) appearing most frequently in a single program may be selected. Otherwise, a preference determination unit (not shown) may register the words (keywords) (described below) selected by the user in the past. If the caption processing unit 231 detects a word equal to one of those registered in the preference determination unit in the program, the caption processing unit 231 then applies a preference point (for example, +1) to the detected word. Using the preference point, the words appearing repeatedly can be placed in the order of frequency. Here, the order of the words may be determined by, for example, applying points (for example, +5, +4, +3, +2, +1, and +0) to the words appearing most frequently in the order of frequency in advance, and adding the preference point thereto to use the total points as a basis of determination.

A keyword with highest points in one program may be handled as a representative keyword of the program. As the representative keyword, a word similar to the program title or the like may be selected.

Now, given that the program P41 (information program about places to visit in New York) is recorded, it is estimated that scenes including caption "New York" are displayed frequently. Furthermore, it is estimated that scenes including, for example, caption "building" are displayed frequently as well. Scenes including captions "street" and "park" are displayed for many times relatively as compared to other words.

Since there are many captioned scenes as candidates to be displayed, different points may be applied to programs based on conditions of each program such as genre, broadcast time, and broadcast station, etc., for narrowing down the candidates. The storage may be performed by classifying the programs by the genre, broadcast time, or broadcast station.

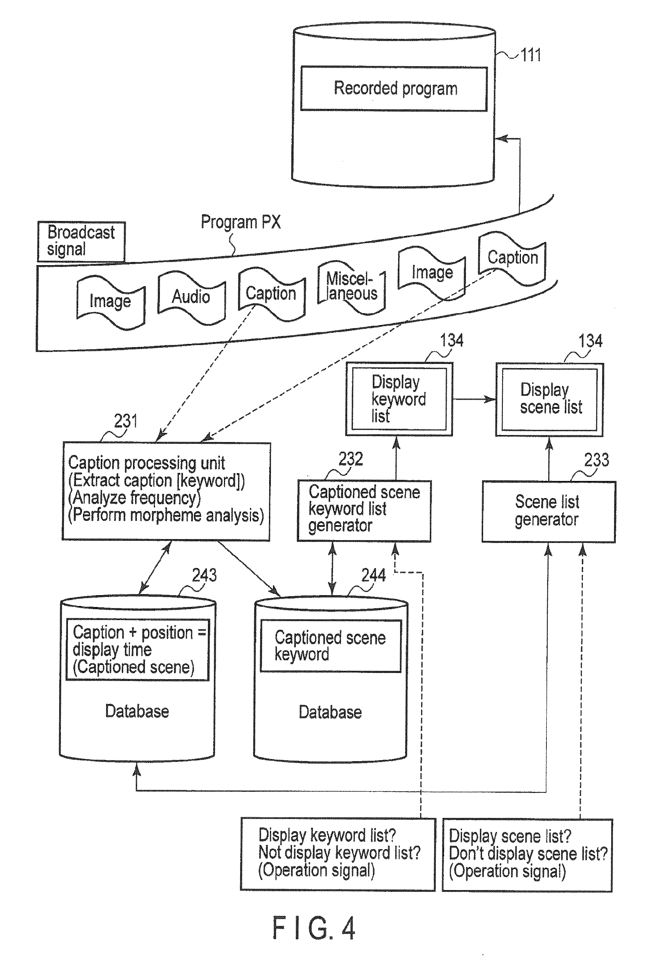

FIG. 4 is a block diagram related to an automatic recording operation of a broadcast signal (program PX, for example) in the memory device 111 (or a recording/reproducing device). A caption stream included in the broadcast signal is taken into the caption processing unit 231. The caption processing unit 231 reads caption data (captioned character string and display time data) from the captions in the caption stream and outputs the caption data as the captioned scene data to the database file 243.

Furthermore, the caption processing unit 231 subjects the character string data of the captions to a morpheme analysis, extracts nouns therefrom to use them as the caption scene keywords, and outputs the extracted nouns to the database file 244. In that case, the caption scene keywords of the program currently being broadcast or of the program currently being reproduced are stored in the database file 244. Therefore, the caption processing unit 231 may store the caption scene keywords of the program currently being broadcast or reproduced and extracted from the character string data temporarily stored in the database file 243 in the database file 244.

That is, any one of the two methods can be used to store the captioned scene data in the database file 243 from the caption processing unit 231 and to store the keywords in the database file 244. One is to store the data from the caption processing unit 231 in both database files 243 and 244 in parallel. The other one is to prepare the keywords from the captioned scene data temporarily stored in the database file 233 and store the prepared keywords in the database file 244.

Since a large number of caption scene keywords are acquired in relation to the prepared keywords, the limiting process is performed in a similar manner as described above when the caption scene keywords are stored in the database file 244.

During the automatic recording, the captioned scenes and the caption scene keywords are stored in the database files 243 and 244 regardless of the operation by the user.

Now, given that the user operates the remote control 115 to display keywords, the captioned scene keyword list generator 232 and the display controller 234 shown in FIG. 1 select (several) keywords of high priority related to program PX from the database file 244 and display them on the display 134.

As can be understood from the above, the apparatus of the present embodiment display a plurality of keywords appearing most frequently from the large number of keywords acquired from the captions in the program currently being viewed. Here, the user uses the remove controller, selects any one of the keywords to display the scene list, and presses the confirm button.

Then, the scene list generator 233 generates the scene list including a plurality of the captioned scenes corresponding to the selected keyword referring to the database file 243 and outputs the generated scene list. The display 134 turns to a scene list display state wherein the scene list includes a plurality of scene selection items.

Now, described are what keyword list is generated by the captioned scene keyword list generator 232 and what scene list is generated by the scene list generator 233.

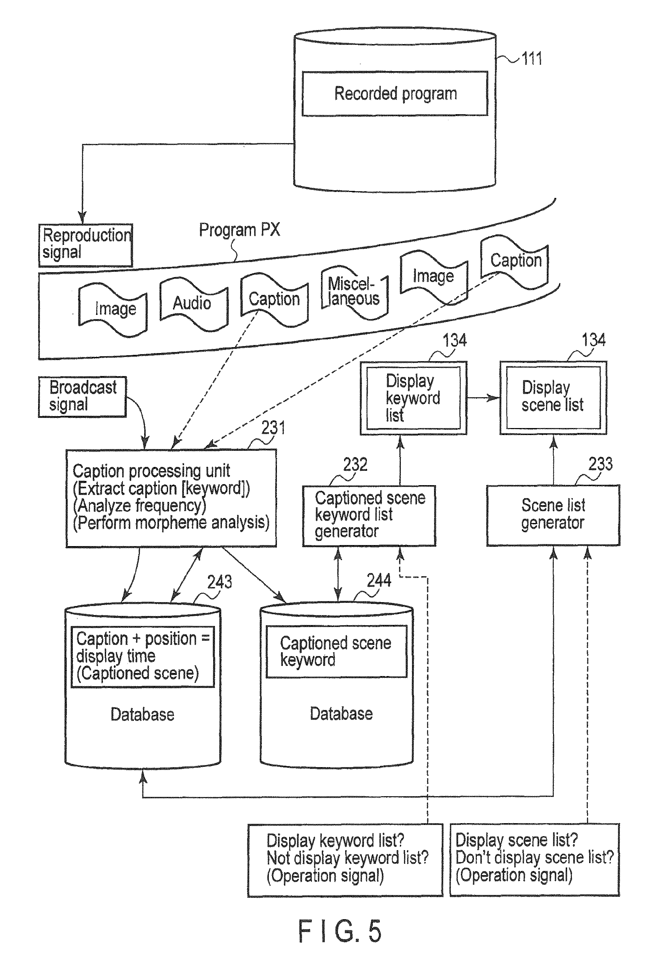

FIG. 5 illustrates reproducing program P14 (live baseball game between New York Fuji (NY-FUJI) and Los Angeles Everest (LA-EVEREST)) recorded in the memory device 111.

In this case, captioned scenes of a reproduction signal to be stored in the database file 243 are not necessarily extracted. However, the signal is automatically received, and thus, the captioned scene data of the program currently being received are stored in the database file 243 serially.

Now, the user operates the remote control 115 to display the keywords. Then, the captioned scene keyword list generator 232 and the display controller 234 shown in FIG. 1 select (several) keywords of high priority related to program P14 from the database file 244 and display them on the display 134. Consequently, a keyword list including representative keywords such as "New York", "Fuji", "batter", "Los Angeles", "Everest", "pitcher", "hit", and "homerun" is displayed on the display 134.

Here, if the user is interested in, for example, "New York", the user may operate the remote control to select the keyword "New York" and press the confirm button. Then, the scene list generator 233 detects the captioned scene data including the word "New York". The scene list generator 233 generates the scene list indicative of the scene selection items of program P41 (information program about places to visit in New York) and scene selection items of the other programs (including captions "New York") for display. Since program P41 (information program about places to visit in New York) naturally includes many "New York" captions, it is selected here.

If the user operates the remote control to select one of the scene selection items of program P41 (information program about places to visit in New York) and presses the confirm button, then program P41 is reproduced.

The above description has simply referred to the relationship between program P14 and program P41 for easier understanding. However, it is highly possible that there are many other captioned scene data including the captions "New York" in actual cases. In those cases, the scene selection items related to the captions "New York" of the other programs are displayable as the scene list. The selection items displayed on a single screen may be five or six and the other selection items can be displayed on the screen by scrolling.

Now, given that the user selects the keyword "Fuji" from the keyword list including the keywords "New York", "Fuji", "batter", "Los Angeles" during program P14, then, the scene list including the scene selection items corresponding to program P24 (today's topstory: Mt. Fuji registered as World Heritage site) and program P42 (information program about Mt. Fuji: World Heritage site) is displayed. The user refers to the scene list, and decides what program is viewed next.

In the above description, when the keyword "Fuji" is selected, the scene list to be displayed is a representative scene list of the whole related programs. However, various methods can be used to display and use the scene list as described below.

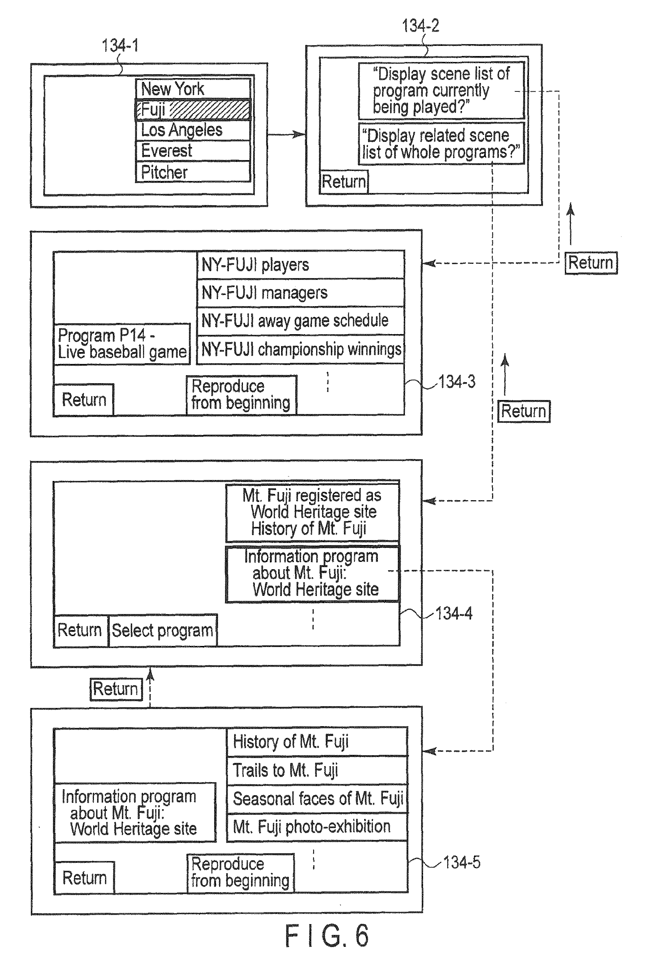

FIG. 6 illustrates an example of how to use the scene list. Screen 134-1 indicates the keywords "New York", "Fuji", "Los Angeles", "Everest", and "pitcher" those are included in the caption data of the program P14. Now, given that the user selects the keyword "Fuji", screen 134-2 shows prompts asking "Display scene list of program currently being played?" and "Display related scene list of whole programs?" Then, if the user operates the remote control to select the prompt "Display scene list of program currently being played?" and presses the confirm button, the screen switches to 134-3.

The screen 134-3 indicates a plurality of scene selection items prepared during program P14: "live baseball game". In this example, the selection items such as "NY-FUJI players", "NY-FUJI managers", "NY-FUJI away game schedule", and "NY-FUJI championship winnings" are displayed. At the same time, a selection button to select "cue reproduction" or "whole reproduction" is displayed together. If the "whole reproduction" button is selected, program P14 is reproduced from its beginning. If any one of the scene selection items and the "cue reproduction" are selected or if any one of the selection items and the confirm button is pressed, the selected scene is reproduced from its beginning.

On the other hand, if the user selects the prompt "Display related scene list of whole programs?" in the screen 134-2, the representative selection item of program P24 (Mt. Fuji registered as World Heritage site) and the representative selection item of program P42 (History of Mt. Fuji) are displayed as in screen 134-4.

In the database file 243, each program is stored to have its representative captioned scene. The representative captioned scene is selected in various ways. For example, the representative captioned scene may be the scene with a caption most frequently appearing in the program, and the captioned scene data may be prepared based on the representative captioned scene together with the time information thereof.

In the screen 134-4, there are two selection items for the scene list selection; however, there are more selection items displayed in an apparatus actually realized. In the screen 134-4, any one of the programs is selected by the remote control (in FIG. 6, program P42 "information program about Mt. Fuji: World Heritage site" is currently being selected). Then, the screen turns to, for example, 134-5 indicating that program P42 "information program about Mt. Fuji: World Heritage site" together with the buttons to decide whether the program is reproduced from a cued chapter or whether the program is reproduced from the beginning.

If the user uses the remote control to select the button to reproduce the program from the beginning and presses the confirm button, program P42 is reproduced from its beginning. If the user uses the remote control to select any one of the selection items "History of Mt. Fuji", "trails to Mt. Fuji", "seasonal faces of Mt. Fuji", and "Mt. Fuji photo-exhibition" and presses the confirm button, the chapter cued therein is reproduced from its beginning.

That is, when the scene list generator 233 generates a plurality of scene selection items for displaying the scene list, the scene list generator 233 may generate selection items for selecting a cued scene in a single program and/or selection items for selectively designate a scene from a plurality of programs stored in the memory medium. When the scene selection item for selecting a cued scene is selected, the reproduction jumps to the cued chapter in the single program. When the scene selection item of the plurality of programs is selected, the reproduction jumps to the selected program.

Furthermore, a back button is displayed on the screen. If the user selects the back button and presses the confirm button of the remote control, the screen goes back to the previous screen.

Furthermore, if the scene lists are displayed on the screen, the scene list generator 233 displays a selection button indicative of whether or not the program corresponding to the scene selection items should be reproduced from the beginning.

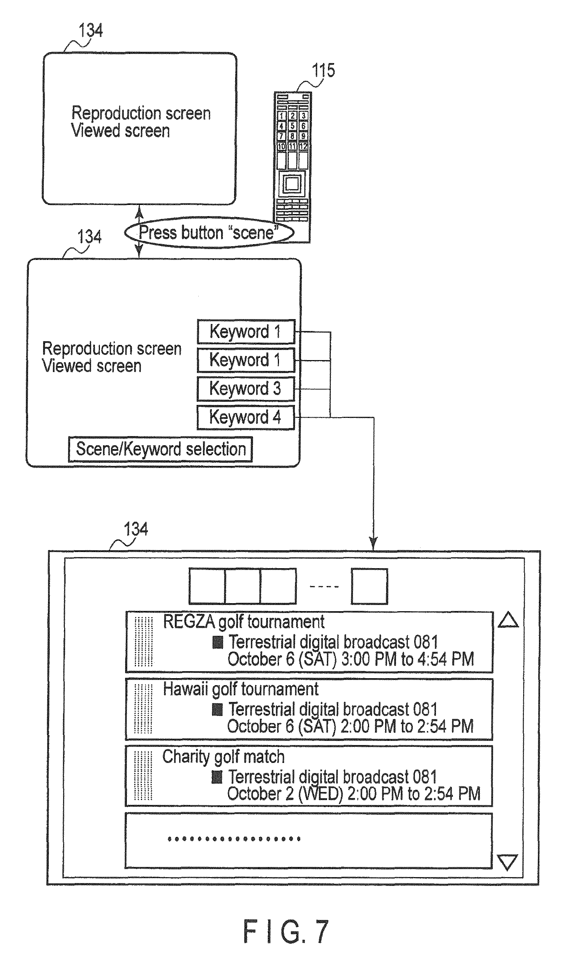

FIG. 7 illustrates another example of images displayed in a display according to an operation of another embodiment. While a program is being reproduced, if a user presses, for example, a "captioned scene" button of a remote control 115, a plurality of keywords (keywords 1 to 5, for example) are displayed. If any one of the keywords is selected by a cursor and a confirm button of the remote control is pressed, a scene list is displayed. FIG. 7 illustrates an example in which the list of related scenes of the whole programs is displayed. Given that a keyword "golf" is selected, the scene list of programs related to the "golf" is displayed. The selection items in the scene list may include information such as program title, time to broadcast, etc.

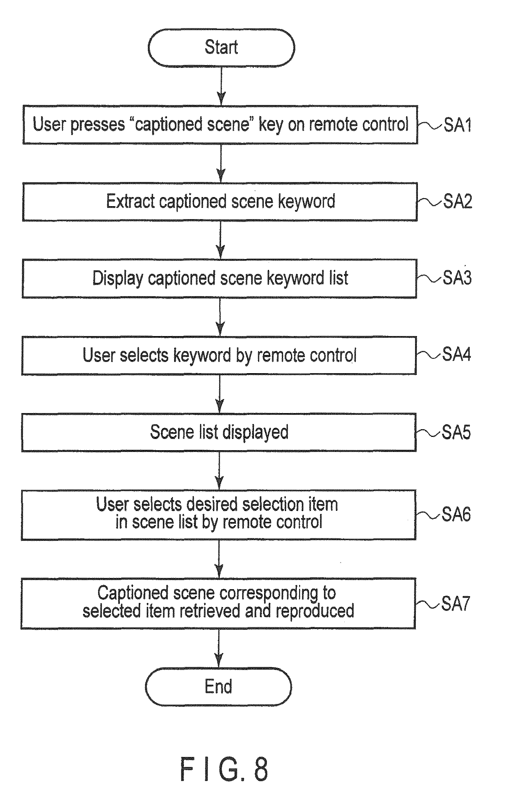

FIG. 8 is a flowchart illustrating an operation example of another embodiment. If a user presses, for example, a "captioned scene" button of a remote control, caption scene keywords are extracted and a list of caption scene keywords is indicated (Steps SA1 to SA3). Here, if the user selects a desired keyword by the remote control, the scene list is displayed (Steps SA4 and SA5). If the user further selects a desired one of the scene selection item from the scene list, the selected program is reproduced.

In the above embodiments, the keyword list is generated from the program currently being viewed by the user. Thus, the keyword list does not include keywords extracted from the past programs or keywords based on the user's preferences. The scene list is generated simply based on the keywords in which the user is currently interested.

To build a preference database, the database file 245 may store the keywords selected in the past and the preferences may be determined by the number of selection of the stored keywords. The keywords selected by the user may be gathered weekly and stored together with time axis as history data. The history data of the selected keywords may be used for ascertaining the user's preferences.

The above descriptions have been presented given that the control unit 200 shown in FIG. 1 is integrated in the television receiver. However, each of digital tuner device 102, TS processing unit 122, memory device 111, and control unit 200 may be configured independently. Furthermore, in the control unit 200, each of caption processing unit 231, caption scene keyword list generator 232, scene list generator 233, display controller 234, and memory 240 may be configured independently.

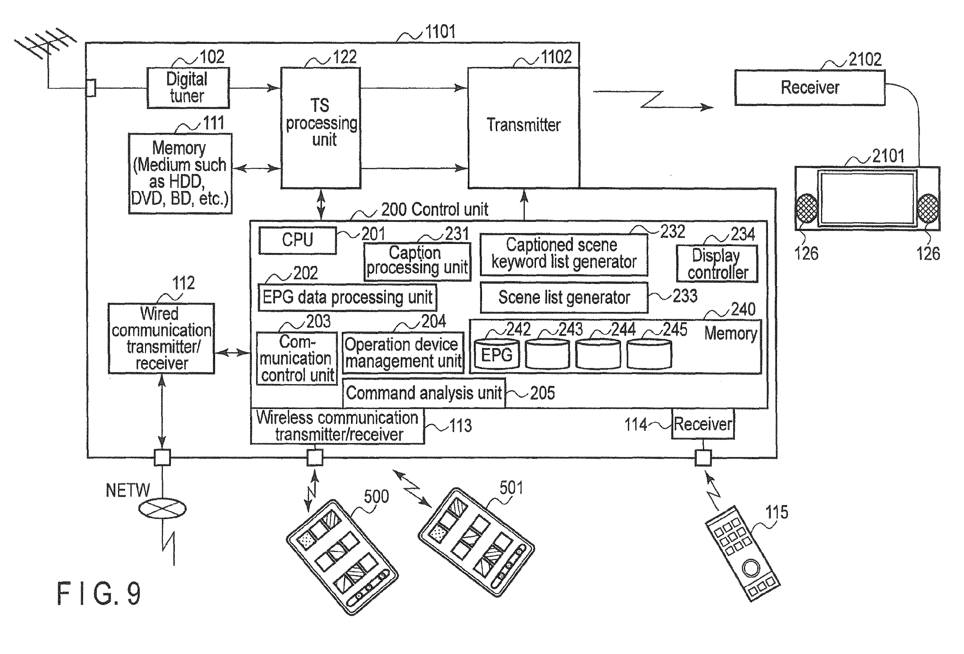

FIG. 9 illustrates still another embodiment. In this embodiment, a system comprises a server 1101 and a viewer 2101. Audio and visual data can be reproduced by the viewer 2101 which is specifically prepared for this system. The audio and visual data are transferred from the server 1101 to the viewer 2101 through a transmitter 1102. The viewer 2101 receives the transferred audio and visual data through a receiver 2102.

Note that, although the caption data of the captions sent together with the broadcast signals are used in the above descriptions, the present embodiments are not limited to the apparatus or method using the caption data. For example, character data converted by an audio/character conversion process may be used instead.

Concerning the above descriptions, even if the term "unit" is replaced with "apparatus", "device", "block", or "module", the scope falls within the present embodiments. Furthermore, even if a structural element of a claim is divided into several parts, and even if several structural elements are combined into a single structural element, the scope falls within the present embodiments. If a claim is written in method claim form, the apparatus of the present embodiments is applied thereto.

Furthermore, the present embodiments are applicable to a computer-readable information storage medium or program.

That is, a computer-readable information storage medium configured to functionalize a computer to execute or to store a program to instruct the computer to execute:
storing caption data generated from captions in programs and time data indicative of a time to display the caption as a scene list data, the scene list data stored in a memory;
extracting at least the caption data from a program currently being reproduced or received to store a character strings of the caption data as keywords, the keywords stored in the memory;
generating a plurality of keywords stored in the memory for display when an operation signal ordering the keywords during the reproduction or reception of the program; and
using the scene list data in the memory when an optional keyword is selected from the keywords currently being displayed and generating scene selection items of a plurality of scenes including the caption data corresponding to the selected keyword as the scene list. In addition, each operation described above can be executed thereby.

## Claims

1. An electronic apparatus **characterized by** comprising:
a first database file (243) configured to store scene list data comprising caption data of received programs and time data indicative of a time to display a caption;
a second database file (244) configured to store keywords comprising character strings of the caption data of a program currently being viewed;
a keyword list generator (232) configured to generate a keyword list by reading a plurality of keywords corresponding to the program from the second database file when an order to display the keywords is input during the program currently being viewed; and
a scene list generator (233) configured to generate a scene list comprising scene selection items of a plurality of scenes comprising the caption data corresponding to a first keyword by using the scene list data when the first keyword is selected from the keywords currently being displayed.

2. The electronic apparatus of claim 1, **characterized in that**, when the scene selection items of the plurality of scenes are generated in the scene list, the scene list generator generates a plurality of scene selection items for selectively cueing a plurality of scenes in a single program.

3. The electronic apparatus of claim 1, **characterized in that**, when the scene selection items of the plurality of scenes are generated in the scene list, the scene list generator generates a plurality of scene selection items for selectively cueing a plurality of scenes in a single program and/or a plurality of scene selection items for selectively designating each scene of a plurality of programs stored in a memory medium (111).

4. The electronic apparatus of claim 1, **characterized in that** the scene list generator displays a selection button for displaying whether or not the program corresponding to the scene selection items is reproduced from a beginning while the scene list is displayed.

5. The electronic apparatus of claim 1, **characterized in that** the scene list data of the first database file is configured to be generated from the caption data extracted from streams of a plurality of programs received by a digital tuner configured to receive a plurality of channels at the same time.

6. The electronic apparatus of claim 1, **characterized in that** the first database file, second database file, keyword list generator, and scene list generator are provided with any one of a digital television receiver, recording/reproducing apparatus, and server.

7. A method for controlling an electronic apparatus, the method **characterized by** comprising:
storing scene list data comprising caption data of received programs and time data indicative of a time to display a caption, the scene list data stored in a memory;
storing keywords comprising character strings of the caption data of a program currently being viewed, the keywords stored in the memory;
generating a keyword list by reading a plurality of keywords corresponding to the program from the memory when an order to display the keywords is input during the program currently being viewed; and
generating a scene list comprising scene selection items of a plurality of scenes comprising the caption data corresponding to a first keyword by using the scene list data when the first keyword is selected from the keywords currently being displayed.

8. The method of claim 7, **characterized in that**, when the scene selection items of the plurality of scenes are generated in the scene list, a scene list generator generates a plurality of scene selection items for selectively cueing a plurality of scenes in a single program.

9. The method of claim 7, **characterized in that**, when the scene selection items of the plurality of scenes are generated in the scene list, a scene list generator generates a plurality of scene selection items for selectively cueing a plurality of scenes in a single program and/or a plurality of scene selection items for selectively designating each scene of a plurality of programs stored in a memory medium.

10. The method of claim 7, **characterized in that** a scene list generator displays a selection button for displaying whether or not the program corresponding to the scene selection items is reproduced from a beginning while the scene list is displayed.

11. A computer-readable information storage medium configured to functionalize a computer to execute:
storing scene list data **characterized by** comprising caption data of received programs and time data indicative of a time to display a caption, the scene list data stored in a memory;
storing keywords comprising character strings of the caption data of a program currently being viewed, the keywords stored in the memory;
generating a keyword list by reading a plurality of keywords corresponding to the program from the memory when an order to display the keywords is input during the program currently being viewed; and
generating a scene list comprising scene selection items of a plurality of scenes comprising the caption data corresponding to a first keyword by using the scene list data when the first keyword is selected from the keywords currently being displayed.
